# EUROPÄISCHE PATENTANMELDUNG

(11) **EP 2 775 434 A1**
(43) Veröffentlichungstag der Anmeldung: **10.09.2014**
(21) Anmeldenummer: 13157600.1
(22) Anmeldetag: 04.03.2013
(51) Int. Cl.: G06Q 10/10

(54) **Vorrichtung und Verfahren zur Ermittlung von Baustoffmengen**

(71) Anmelder: Koné, Feé, 4040 Linz (AT)
(72) Erfinder: Koné, Feé, 4040 Linz (AT)
(74) Vertreter: KLIMENT & HENHAPEL

(57) **Zusammenfassung**

Verfahren und Vorrichtung zur Ermittlung von längen-, flächen- oder volumenbasierten Berechnungsgrößen, etwa benötigter Baustoffmengen eines Bauprojekts, anhand eines Bauplans mithilfe einer Datenverarbeitungseinrichtung (7) zur Ermittlung der Berechnungsgrößen anhand der Berechnungselemente Länge, Fläche oder Volumen, wobei erfindungsgemäß die Datenverarbeitungseinrichtung (7) mit einer Eingabeschnittstelle (8) zur Auswahl eines Berechnungselements versehen ist, und ein, mit der Datenverarbeitungseinrichtung (7) verbundener, stiftförmiger Datenaufnehmer (1) zum Abtasten und Einlesen von längen-, flächen- oder volumendefinierenden Datenpunkten (Pᵢ) des Bauplans vorgesehen ist, sowie eine Lokalisierungseinrichtung für die Spitze (2) des stiftförmigen Datenaufnehmers (1) mit einem Sender eines Lokalisierungssignals und einem Empfänger (5) für das Lokalisierungssignal zur Bestimmung der relativen Position der Spitze (2) zum Empfänger (5). In einem ersten Verfahrensschritt werden hierbei Berechnungselemente ausgewählt, in einem zweiten Verfahrensschritt mithilfe des stiftförmigen Datenaufnehmers (1) Datenpunkte (Pᵢ) des Bauplans eingelesen, und in einem dritten Verfahrensschritt aus den eingelesenen Datenpunkten (Pᵢ) die ausgewählten Berechnungselemente durch lineare Interpolation rekonstruiert.

## Beschreibung

Die Erfindung betrifft ein Verfahren zur Ermittlung von längen-, flächen- oder volumenbasierten Berechnungsgrößen, etwa benötigter Baustoffmengen eines Bauprojekts umfassend mehrere Bauschritte, anhand eines Bauplans mithilfe einer Datenverarbeitungseinrichtung, die die Berechnungsgröße anhand der Berechnungselemente Länge, Fläche oder Volumen ermittelt, gemäß dem Oberbegriff von Anspruch 1, sowie eine entsprechende Vorrichtung gemäß dem Oberbegriff von Anspruch 4.

Das Erstellen von Angeboten und Material- und Stücklisten, sowie die Kalkulation der Kosten von Bauprojekten beruht im Wesentlichen auf der Ermittlung benötigter Baustoffmengen und stellt eine häufig zu leistende und zeitintensive Arbeit von Handwerkern, Technikern und Planern dar. Hierfür müssen Berechnungselemente wie Strecken, Flächen und Volumina erfasst und entsprechende Berechnungen für benötigtes Material durchgeführt werden. Soll etwa ein neuer Estrich verlegt werden, ist eine Gesamtbodenfläche zu ermitteln, aus der mithilfe einer vorgegebenen Höhe für den Estrich das Volumen für den benötigten Baustoff, etwa Beton, ermittelt werden kann. Bei der Aufgliederung eines Bauprojektes in einzelne Bauschritte wird dabei zumeist auf standardisierte und mitunter genormte Leistungsbeschreibungen zurückgegriffen, die eine Auflistung einer Vielzahl von Bautätigkeiten unter Zuordnung von Leistungsnummern enthalten. Die einzelnen Bautätigkeiten werden in der Praxis auch als "Positionen" bezeichnet, und die entsprechenden Leistungsnummern als "Positionsnummern". Im Folgenden werden einzelne Bautätigkeiten jedoch nicht als Positionen, sondern allgemein als Bauschritte bezeichnet, da im Rahmen der vorliegenden Erfindung die einzelnen Bauschritte auch beliebig festgelegt werden könnten. Ein einzelner Bauschritt erfordert die Kenntnis spezifischer Berechnungselemente, um die benötigte Baustoffmenge ermitteln zu können. So erfordert etwa die Ermittlung der benötigten Baustoffmenge für einen Estrich die Kenntnis einer Bodenfläche als Berechnungselement, oder die Kostenkalkulation für das Ausmalen eines Raumes die Kenntnis des Umfanges der Bodenfläche des Raumes, um durch Multiplikation mit der Raumhöhe die benötigte Wandfläche als Berechnungselement zu erhalten. Unter dem Begriff "Baustoff" wird im Folgenden jegliches Baumaterial verstanden, dessen Mengenkalkulation in Bauprojekten von Interesse sein kann.

In herkömmlicher Weise erfolgt die Ermittlung benötigter Baustoffmengen eines Bauprojekts und in weiterer Folge etwa die Angebotserstellung anhand analoger Baupläne in Form von Grundrissplänen, Schnitten, Ansichten, Detailplänen oder Einreichplänen, die zumeist vom Kunden übermittelt werden. Aus diesen Bauplänen werden sämtliche Berechnungselemente anhand der Abmessungen ermittelt und mittels Taschenrechner die benötigten Baustoffmengen errechnet. Auch wenn die vorhandenen Baupläne vollständig und zuverlässig sind, stellt diese Tätigkeit eine zeitintensive und fehleranfällige Arbeit dar, die im Falle einer Ablehnung des Angebots zudem vergeblich ist. In der Praxis sind aber die übermittelten Baupläne oftmals unvollständig oder unzuverlässig, da sie etwa oftmals vergrößert oder verkleinert kopiert wurden, Abmessungen falsch oder unvollständig eingetragen wurden, oder überhaupt nur in Form von Fotos vorhanden sind. Die Ermittlung benötigter Baustoffmengen stellt sich in diesen Fällen sehr mühsam dar. Erschwerend wirkt zudem die Vorgabe, die Kalkulation der Baustoffmengen und die Angebotserstellung nachprüfbar zu gestalten, sodass jede Mengenermittlung nachvollziehbar zu erstellen und dem Angebot zu hinterlegen ist. Des Weiteren muss nicht erwähnt werden, dass die Ermittlung von Baustoffmengen und die Angebotserstellung oder Kostenkalkulation eines Bauprojektes möglichst genau zu erfolgen hat, da jeglicher Fehler zu Zeitverzögerungen und unerwarteten Kostenüberschreitungen des Bauprojekts, indem etwa zu geringe Baustoffmengen berechnet und bestellt wurden, oder zu Kostennachteilen, indem zu hohe Baustoffmengen berechnet und bestellt wurden, führt.

Es ist somit das Ziel der Erfindung, die Ermittlung von längen-, flächen-, oder volumenbasierten Berechnungsgrößen, etwa von benötigten Baustoffmengen für Bauprojekte, anhand von Bauplänen zu vereinfachen und somit kostengünstiger zu gestalten. Des Weiteren soll die Ermittlung von längen-, flächen-, oder volumenbasierten Berechnungsgrößen auch anhand von Bauplänen mit unvollständigen Abmessungen möglich sein, sowie nachvollziehbar und überprüfbar erfolgen.

Diese Ziele werden durch die Merkmale von Anspruch 1 sowie 4 erreicht. Anspruch 1 bezieht sich auf ein Verfahren zur Ermittlung von längen-, flächen- oder volumenbasierten Berechnungsgrößen, etwa benötigter Baustoffmengen eines Bauprojekts umfassend mehrere Bauschritte, anhand eines Bauplans mithilfe einer Datenverarbeitungseinrichtung, die die Berechnungsgröße anhand der Berechnungselemente Länge, Fläche oder Volumen ermittelt, wobei erfindungsgemäß vorgesehen ist, dass in einem ersten Verfahrensschritt über eine Eingabeschnittstelle Berechnungselemente ausgewählt werden, in einem zweiten Verfahrensschritt mithilfe eines, mit der Datenverarbeitungseinrichtung verbundenen, stiftförmigen Datenaufnehmers längen-, flächen- oder volumendefinierende Datenpunkte des Bauplans eingelesen werden, und in einem dritten Verfahrensschritt aus den eingelesenen Datenpunkten die ausgewählten Berechnungselemente durch lineare Interpolation rekonstruiert werden. Der stiftförmige Datenaufnehmer ermöglicht das Abtasten und Einlesen von Datenpunkten direkt aus dem Bauplan, wobei mithilfe der Eingabeschnittstelle eine vorherige Definition der eingelesenen Datenpunkte als entsprechendes, etwa für den jeweiligen Bauschritt spezifisches Berechnungselement erfolgt. Anhand dieser Informationen kann im Rahmen des dritten Verfahrensschrittes das entsprechende Berechnungselement durch lineare Interpolation rekonstruiert werden. Das erfindungsgemäß ermittelte Berechnungselement steht in weiterer Folge in an sich bekannter Weise einer automatisierten Berechnung der benötigten Berechnungsgröße, etwa einer Baustoffmenge, zur Verfügung.

Aufgrund der punktweisen Abtastung des vorhandenen Bauplans kann eine rasche und einfache Datenübernahme erfolgen. Die Rekonstruktion des benötigten Berechnungselementes erfolgt erfindungsgemäß einerseits qualitativ durch entsprechende Vorgabe über die Eingabeschnittstelle in Form der Information "Grund- oder Deckenfläche", "Wandfläche", "Fassadenfläche", "Dachfläche" oder "Länge einer Einzelstrecke", und andererseits durch lineare Interpolation zwischen den eingelesenen Datenpunkten. Wird etwa eine Einzelstrecke vorgewählt, wird aus zwei nacheinander eingelesenen Datenpunkten durch lineare Interpolation eine Einzelstrecke rekonstruiert, deren Länge in weiterer Folge, etwa nach Vorgabe eines bekannten Maßstabes, oder nach einmaliger Kalibrierung des vorhandenen Bauplanes anhand einer bekannten Abmessung, errechnet werden kann. Falls eine Grund- oder Deckenfläche vorgewählt wird, werden mehrere, nacheinander eingelesene Datenpunkte jeweils durch lineare Interpolation zu einem geschlossenen Linienzug verbunden und deren Fläche errechnet. Wird durch die Eingabeschnittstelle die Errechnung einer Wandfläche gewünscht, kann der auf diese Weise rekonstruierte Linienzug zur Berechnung der Länge herangezogen werden, und aus einer vorgegebenen Wandhöhe die Wandfläche errechnet werden. Aus den nun bekannten Berechnungselementen kann auf bekannte Weise die gewünschte Berechnungsgröße, etwa eine für den jeweiligen Bauschritt benötigte Baustoffmenge, ermittelt werden.

Des Weiteren kann vorgesehen sein, dass etwa einem Bauschritt mehrere Berechnungselemente zugeordnet werden, die über die Eingabeschnittstelle mittels Addition oder Subtraktion miteinander verbindbar sind. Falls es sich bei dem Bauschritt etwa um die Herstellung eines Estrichs handelt, sind mitunter mehrere Räume zu berechnen, sodass mehrere Bodenflächen eingelesen werden müssen. Dieser Vorgang wird dadurch erleichtert, indem über die Eingabeschnittstelle eine Additions-Verknüpfung mehrerer, aufeinanderfolgender Berechnungselemente erfolgt. Durch eine Subtraktions-Verknüpfung zweier aufeinanderfolgender Berechnungselemente können etwa innerhalb einer eingelesenen Fläche liegende Teilflächen abgezogen werden, auf die der betreffende Bauschritt keine Anwendung findet. Freilich lassen sich auch zusammengesetzte Berechnungselemente definieren, die eine Kombination etwa aus der Länge eines Polygon-Linienzuges und einer dadurch bestimmten Fläche oder Volumen darstellen.

Falls viele Datenpunkte einzulesen sind, kann mitunter nicht mehr leicht ersichtlich oder erinnerlich sein, welcher Datenpunkt des Bauplans der erste Punkt der Datenaufnahme war. Daher wäre es von Vorteil, wenn der erste Punkt markiert werden könnte, etwa durch einen Kreis, die eigentliche Datenaufnahme für den betreffenden Datenpunkt aber erst nach der Markierung erfolgt. Daher wird vorgeschlagen, dass im zweiten Verfahrensschritt durch Druckausübung auf die Spitze des stiftförmigen Datenaufnehmers ein Lokalisierungssignal für einen, außerhalb des stiftförmigen Datenaufnehmers angeordneten Empfänger aktiviert wird, wobei erst bei Druckentlastung der Spitze des stiftförmigen Datenaufnehmers ein punktförmiges Einlesen von Datenpunkten erfolgt. Die Aktivierung des Lokalisierungssignals kann etwa für eine vorgegebene Zeitspanne aufrechterhalten werden, und das Lokalisierungssignal nach Ablauf der Zeitspanne wieder abgeschaltet werden. Der Anwender kann somit den Datenaufnehmer zunächst dazu verwenden, den ersten Datenpunkt einzukreisen, um ihn zu markieren. Das Lokalisierungssignal wird dabei aktiviert, da Druck auf die Spitze ausgeübt wird. Eine punktförmige Datenaufnahme erfolgt aber erst, wenn der Anwender die Spitze auf den betreffenden Datenpunkt geführt und in weiterer Folge die Spitze vom Bauplan abgehoben hat. In weiterer Folge bleibt das Lokalisierungssignal für die vorgegebene Zeitspanne weiterhin aktiviert, eine punktförmige Datenaufnahme erfolgt aber wiederum erst, wenn der Anwender die Spitze auf einen weiteren Datenpunkt geführt und in weiterer Folge die Spitze vom Bauplan abgehoben hat. Dadurch wird einerseits ein rasches, punktförmiges Einlesen von Datenpunkten ermöglicht, aber andererseits auch das Einlesen von Datenpunkten über Nachziehen von Linien am Bauplan, da das Lokalisierungssignal aktiviert bleibt.

Des Weiteren betrifft die Erfindung eine Vorrichtung zur Ermittlung von längen-, flächen- oder volumenbasierten Berechnungsgrößen, etwa benötigter Baustoffmengen eines Bauprojekts umfassend mehrere Bauschritte, anhand eines Bauplans mithilfe einer Datenverarbeitungseinrichtung zur Ermittlung der Berechnungsgrößen anhand der Berechnungselemente Länge, Fläche oder Volumen. Hierbei wird erfindungsgemäß vorgeschlagen, dass die Datenverarbeitungseinrichtung mit einer Eingabeschnittstelle zur Auswahl eines Berechnungselements versehen ist, und ein, mit der Datenverarbeitungseinrichtung verbundener, stiftförmiger Datenaufnehmer zum Abtasten und Einlesen von längen-, flächen- oder volumendefinierenden Datenpunkten des Bauplans vorgesehen ist, sowie eine Lokalisierungseinrichtung für die Spitze des stiftförmigen Datenaufnehmers mit einem Sender eines sich im Raum ausbreitenden Lokalisierungssignals und einem Empfänger für das Lokalisierungssignal zur Bestimmung der relativen Position der Spitze zum Empfänger. Die Eingabeschnittstelle kann etwa mithilfe einer Tastatur oder Computermaus gebildet werden, mit der ein Feld auf einer graphischen Benutzeroberfläche der Datenverarbeitungseinrichtung angeklickt wird, oder auch durch ein berührungsempfindliches Eingabefeld einer graphischen Benutzeroberfläche. Erfindungsgemäß wurde des Weiteren ein, für ein Abtasten und Einlesen von Datenpunkten eines Bauplans optimierter, stiftförmiger Datenaufnehmer entwickelt, indem eine Lokalisierungseinrichtung für die Spitze des stiftförmigen Datenaufnehmers zur Bestimmung ihrer relativen Position zu einem Empfänger vorgesehen ist. So kann etwa die Lokalisierungseinrichtung einen, am stiftförmigen Datenaufnehmer angeordneten und über Druck auf die Spitze aktivierbaren Sender eines Lokalisierungssignals umfassen, sowie einen, außerhalb des stiftförmigen Datenaufnehmers angeordneten Empfänger für das Lokalisierungssignal. Der Sender wird vorzugsweise nahe der Spitze des stiftförmigen Datenaufnehmers angeordnet, um die Messgenauigkeit zu erhöhen. Der Empfänger des Lokalisierungssignals dient hierbei als externer Bezugspunkt für den Sender des Lokalisierungssignals, um die jeweilige Position der Spitze des stiftförmigen Datenaufnehmers relativ zum Empfänger bestimmen zu können. Mithilfe einer solchen Lokalisierungseinrichtung kann die relative Positionierung mehrerer, in einer Ebene in räumlichem Abstand zueinander angeordneter Datenpunkte auch dann bestimmt werden, wenn die Führung des Datenaufnehmers zwischen den einzelnen Datenpunkten in Form einer dreidimensionalen Bewegung erfolgte. Ohne Lokalisierungseinrichtung und externem Bezugspunkt darf der stiftförmige Datenaufnehmer nur zweidimensional bewegt, also nicht vom Bauplan abgehoben werden, da sich der Datenaufnehmer in diesem Fall nur anhand des Untergrundes orientieren kann, und Positionsänderungen des Datenaufnehmers anhand eng beieinander liegender Messpunkte auf der Bauplanebene ermittelt werden. Ein Abtasten von Datenpunkten eines Bauplans mithilfe dreidimensionaler Bewegungen, indem gewissermaßen von einem Punkt am Bauplan zum nächsten "gesprungen" wird, kann aber viel rascher und bequemer erfolgen, als wenn Abmessungen durch zweidimensionale Bewegungen am Bauplan eingelesen werden müssen. Des Weiteren ist es mit der erfindungsgemäßen Vorrichtung nicht notwendig, dass der Bauplan selbst Eigenschaften zur Lokalisierung des Datenaufnehmers aufweist, etwa Raster und dergleichen. Vielmehr gestattet die erfindungsgemäße Vorrichtung die Ermittlung von längen-, flächen oder volumenbasierten Berechnungsgrößen anhand beliebiger Baupläne.

Bei dem Sender des Lokalisierungssignals kann es sich etwa um eine Ultraschallquelle handeln, und beim Empfänger um einen ortsauflösenden Ultraschalldetektor. Unter einem ortsauflösenden Ultraschalldetektor wird hierbei verstanden, dass sich der Detektor dazu eignet, anhand des empfangenen Ultraschallsignals die Position der Ultraschallquelle zu ermitteln.

Gemäß einer bevorzugten Ausführungsform ist ferner vorgesehen, dass die erfindungsgemäße Vorrichtung von einem Datenmodus, in dem ein punktförmiges Einlesen von Datenpunkten möglich ist, in einen Schreibmodus, in dem ein kontinuierliches Einlesen von Datenpunkten möglich ist, umschaltbar ist. Die Verarbeitung der eingelesenen Daten kann somit jeweils für jede der beiden Betriebsmoden optimiert werden. Ein solcher Datenaufnehmer ist für den Einsatz im Baugewerbe und die Baukalkulation überaus praktisch, da einerseits Skizzen und handschriftliche Notizen angefertigt und für das entsprechende Berechnungselement, zu einzelnen Positionen oder zum Bauprojekt abgespeichert werden können, und andererseits Datenpunkte, wie sie im erfindungsgemäßen Verfahren benötigt werden, eingelesen werden können. Des Weiteren könnte auch vorgesehen sein, dass die Datenaufnahme überhaupt ausgeschaltet werden kann, sodass der stiftförmige Datenaufnehmer als üblicher Schreibstift verwendet werden kann. Freilich ist im Schreibmodus aber auch das Nachziehen von Linien des Bauplans mithilfe des stiftförmigen Datenaufnehmers, und somit eine linienförmige Datenaufnahme durch kontinuierliches Einlesen von Datenpunkten weiterhin möglich.

Die praktische Arbeit mit der erfindungsgemäßen Vorrichtung wird des Weiteren sehr erleichtert, indem ein optischer oder akustischer Signalgeber zur Generierung eines Signals nach jedem erfolgten Einlesen eines Datenpunktes vorgesehen ist. Insbesondere bei der Bearbeitung analoger Baupläne kann nicht ständig mitverfolgt werden, ob das Einlesen eines jeden Datenpunktes durch die Datenverarbeitungseinrichtung korrekt erfolgt ist. Ein entsprechendes optisches oder akustisches Signal ermöglicht daher ein rascheres und hinsichtlich der Datenaufnahme vollständiges Arbeiten.

Schließlich wird vorgeschlagen, dass der stiftförmige Datenaufnehmer einen Taster zur Signalisierung des Einleseschlusses von Datenpunkten eines Berechnungselements an die Datenverarbeitungseinrichtung aufweist. Wenngleich der Einleseschluss eines Berechnungselements auch etwa über die Eingabeschnittstelle erfolgen könnte, stellt die Anordnung eines entsprechenden Tasters am stiftförmigen Datenaufnehmer eine einfache und praktische Lösung dar, die ein rasches und bequemes Arbeiten ermöglicht.

Die Erfindung wird im Folgenden anhand eines Ausführungsbeispiels mithilfe der beiliegenden Figuren näher erläutert. Es zeigen hierbei die
Fig. 1 eine schematische Darstellung des grundlegenden Aufbaus einer Ausführungsform der erfindungsgemäßen Vorrichtung,
Fig. 2a ein Beispiel eines Bauplans, der in Form von Datenpunkten zur Erstellung eines Berechnungselementes eingelesen wird,
Fig. 2b eine Darstellung eines, anhand von Fig. 2a erstellten Berechnungselementes, und die
Fig. 3 ein Flussschema einer Ausführungsform des erfindungsgemäßen Verfahrens.

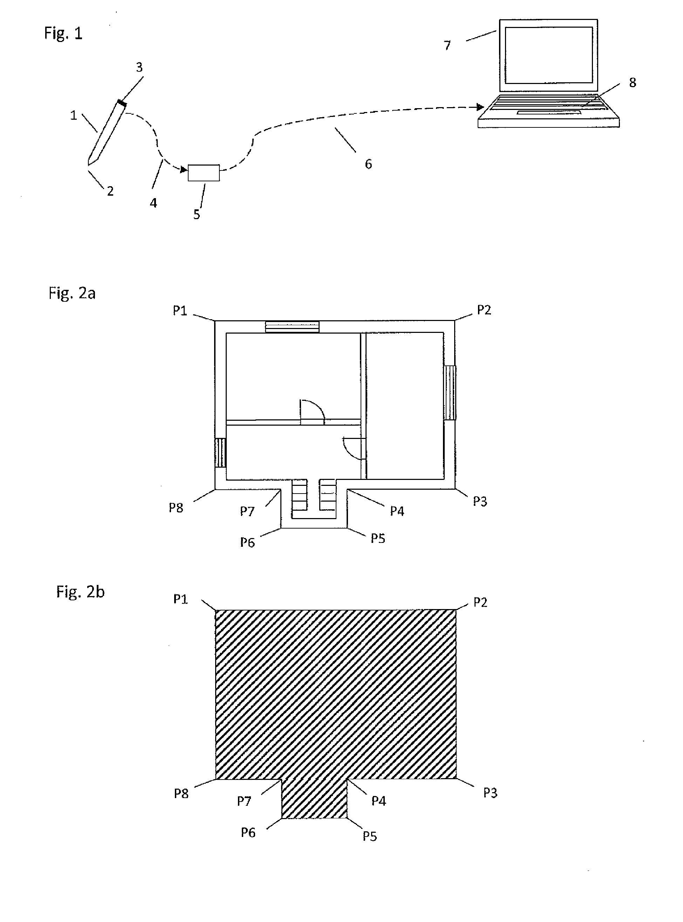

Zunächst wird auf die Fig. 1 Bezug genommen, die eine schematische Darstellung des grundlegenden Aufbaus einer Ausführungsform der erfindungsgemäßen Vorrichtung mit einem stiftförmigen Datenaufnehmer 1 und einer Datenverarbeitungseinrichtung 7 zeigt. Der stiftförmige Datenaufnehmer 1 ist über das Lokalisierungssignal mit dem Empfänger 5 verbunden, der über eine Datenverbindung, etwa eine Kabel- oder Bluetooth-Verbindung 6, mit der Datenverarbeitungseinrichtung 7 verbunden ist. Auf diese Weise können Daten, die mit dem stiftförmigen Datenaufnehmer 1 eingelesen werden, in die Datenverarbeitungseinrichtung 7 übertragen werden. Die Datenverarbeitungseinrichtung 7 verfügt des Weiteren über eine weitere Eingabeschnittstelle 8, etwa in Form einer Tastatur, einer Computermaus, oder eines berührungsempfindlichen Bildschirmes. Der stiftförmige Datenaufnehmer 1 verfügt zum Abtasten und Einlesen von Datenpunkten Pᵢ eines analogen Bauplans gemäß einer Ausführungsform über eine druckempfindliche Spitze 2, die bei leichter Druckausübung auf die betreffende Stelle des Bauplanes ein Lokalisierungssignal in Form eines UltraschallSignales an den Empfänger 5 sendet, der das Ultraschall-Signal ortsauflösend detektiert und die Position der Ultraschall-Signalquelle, und in weiterer Folge der Spitze 2 des stiftförmigen Datenaufnahmers 1 und somit des eingelesenen Datenpunktes Pᵢ, bestimmt. Verfahren zur Lokalisierung einer Ultraschallquelle anhand eines Ultraschallempfängers sind hinlänglich bekannt. Der Empfänger 5 ist dabei außerhalb des stiftförmigen Datenaufnehmers 1 und von ihm beabstandet und ruhend angeordnet, sodass er als räumlicher Bezugspunkt für die Ultraschall-Signalquelle dienen kann. Aufgrund der Bezugnahme auf einen externen Empfänger kann unabhängig von der zwischenzeitlichen Bewegung des Datenaufnehmers die augenblickliche Position der Spitze jederzeit bestimmt werden. Freilich ist der Empfänger 5 ausreichend nahe dem stiftförmigen Datenaufnehmer 1 anzuordnen, sodass ein guter Empfang des Lokalisierungssignals, sowie eine gute Positionsbestimmung möglich sind. Eine praktische Lösung besteht etwa darin, den Empfänger 5 mit einer klammerartigen Befestigungsvorrichtung auszustatten, sodass er auf den Bauplan geklemmt werden kann. Es kann auch vorgesehen sein, dass über die Eingabeschnittstelle 8 die Datenverarbeitungseinrichtung 7 von einer Positionsänderung des Empfängers 5 in Kenntnis gesetzt werden kann, etwa weil der Empfänger 5 absichtlich oder unabsichtlich verschoben wurde. Somit können die in weiterer Folge eingelesenen Berechnungselemente separat von den zuvor eingelesenen Berechnungselementen dargestellt werden, falls eine graphische Darstellung der Berechnungselemente erfolgt. Für die Ermittlung der längen-, flächen- oder volumenbasierten Berechnungsgrößen ist die relative Position nacheinander eingelesener Berechnungselemente, ob diese nun korrekt oder inkorrekt wiedergegeben wird, aber unerheblich. Allerdings ist darauf zu achten, dass es während des Einlesens eines Berechnungselements nicht zu einer Verschiebung des Empfängers 5 kommt, ansonsten muss das Einlesen des betreffenden Berechnungselements wiederholt werden. Auf zuvor oder danach eingelesene Berechnungselemente bleibt diese Verschiebung des Empfängers 5 aber wiederum ohne Einfluss.

Der stiftförmige Datenaufnehmer 1 weist ferner einen Taster 3 zur Signalisierung des Einleseschlusses von Datenpunkten Pᵢ eines Berechnungselements an die Datenverarbeitungseinrichtung 7 auf. Wenngleich der Einleseschluss eines Berechnungselements auch etwa über die Eingabeschnittstelle 8 erfolgen könnte, stellt die Anordnung eines entsprechenden Tasters 3 am stiftförmigen Datenaufnehmer 1 eine einfache und praktische Lösung dar, die ein rasches und bequemes Arbeiten ermöglich. Der Taster 3 ist in der Fig. 1 am Stiftkopf gezeigt, vorzugsweise wird er jedoch im Griffbereich nahe der Spitze angeordnet sein, um eine einfache und rasche Betätigung des Tasters 3 zu ermöglichen, ohne die Fingerhaltung verändern zu müssen. Die praktische Arbeit mit der erfindungsgemäßen Vorrichtung wird des Weiteren sehr erleichtert, indem ein Signalgeber zur Generierung eines optischen oder akustischen Signals nach jedem erfolgten Einlesen eines Datenpunktes Pᵢ vorgesehen ist. Insbesondere bei der Bearbeitung analoger Baupläne kann nicht ständig mitverfolgt werden, ob das Einlesen eines jeden Datenpunktes Pᵢ durch die Datenverarbeitungseinrichtung 7 korrekt erfolgt ist. Ein entsprechendes optisches oder akustisches Signal ermöglicht daher ein rascheres Arbeiten bei vollständiger Datenaufnahme.

Der stiftförmige Datenaufnehmer 1 ist des Weiteren vorzugsweise von einem Datenmodus, in dem ein punktförmiges Einlesen von Datenpunkten Pᵢ möglich ist, in einen Schreibmodus, in dem ein kontinuierliches Einlesen von Datenpunkten Pᵢ möglich ist, umschaltbar. Die Verarbeitung der eingelesenen Daten kann somit jeweils für jede der beiden Betriebsmoden optimiert werden. In einem Datenmodus erfolgt etwa die Generierung eines kurzzeitigen Ultraschall-Impulses durch die Utraschallquelle in der Spitze 2 des stiftförmigen Datenaufnehmers 1, die durch Druckausübung auf die Spitze 2 aktiviert wird, und im Schreibmodus die Generierung eines kontinuierlichen Ultraschall-Signals, das mithilfe des Empfängers 5 zeitdiskret verwertet wird. Der stiftförmige Datenaufnehmer 1 kann aber auch so ausgeführt werden, dass das Lokalisierungssignal durch Druckausübung auf die Spitze 2 des stiftförmigen Datenaufnehmers 1 aktiviert und für eine vorgegebene Zeitspanne aufrechterhalten wird, wobei erst bei Druckentlastung der Spitze 2 des stiftförmigen Datenaufnehmers 1 ein punktförmiges Einlesen von Datenpunkten Pᵢ erfolgt. Nach Ablauf der Zeitspanne wird das Lokalisierungssignal wieder abgeschaltet, wobei eine punktförmige Datenaufnahme während dieser Zeitspanne erst dann erfolgt, wenn der Anwender die Spitze 2 auf den betreffenden Datenpunkt Pᵢ geführt und in weiterer Folge die Spitze 2 vom Bauplan abgehoben hat. Auf diese Weise wird der stiftförmige Datenaufnehmer 1 so lange im Schreibmodus betrieben, als Druck auf die Spitze 2 ausgeübt wird. Sobald eine Druckentlastung der Spitze 2 erfolgt, indem sie vom Bauplan abgehoben wird, wird der stiftförmige Datenaufnehmer 1 während der vorgegebenen Einschaltdauer des Lokalisierungssignals im Datenmodus betrieben. Freilich ist im Schreibmodus aber auch das Nachziehen von Linien des Bauplans mithilfe des stiftförmigen Datenaufnehmers 1, und somit eine linienförmige Datenaufnahme durch kontinuierliches Einlesen von Datenpunkten Pᵢ möglich.

Des Weiteren wird vorgeschlagen, dass der stiftförmige Datenaufnehmer 1 über einen Signalverstärker mit der Datenverarbeitungseinrichtung 7 verbunden ist. Diese Maßnahme erleichtert den dezentralen Einsatz der erfindungsgemäßen Vorrichtung etwa auf Baustellen, da lediglich der stiftförmige Datenaufnehmer 1 und der Empfänger 5 des Lokalisierungssignals durch die Bedienperson mitzuführen sind, und sich die Datenverarbeitungseinrichtung 7 in weiterer Entfernung an sicherer Stelle befinden kann. Freilich ist es auch denkbar, anstelle des Signalverstärkers ein mobiles Endgerät wie etwa ein Mobiltelefon für die Datenübertragung zu nutzen, das über eine entsprechende Schnittstelle mit dem stiftförmigen Datenaufnehmer 1 verbunden ist. Falls das mobile Endgerät mit der entsprechenden Technik ausgestattet ist, könnte das mobile Endgerät sogar als Lokalisierungseinrichtung bzw. als Empfänger 5 des Lokalisierungssignals herangezogen werden.

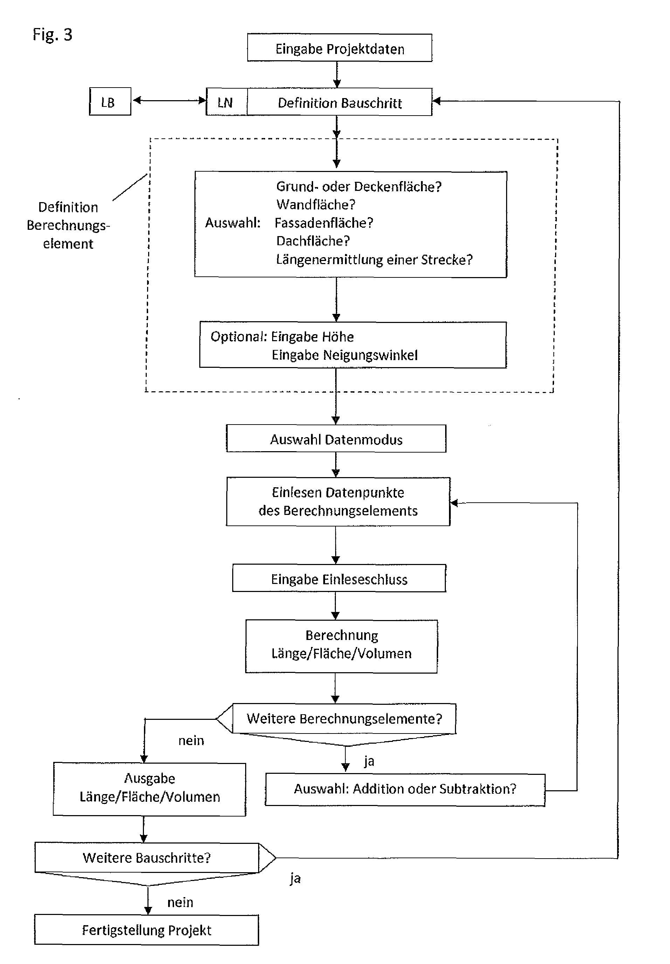

Anhand der Fig. 2 und 3 wird in weiterer Folge erläutert, wie Datenpunkte Pᵢ von einem Bauplan eingelesen und zur Ermittlung benötigter Baustoffmengen eines Bauprojekts verwertet werden können. Zunächst erfolgt die Eingabe der Projektdaten für ein Bauprojekt, also etwa die Eingabe des Kundennamens, der Adresse, des Datums der Erstellung, sowie weiterer Informationen zur Identifizierung des Bauprojektes. Danach wird das Bauprojekt in einzelne Bauschritte aufgeteilt, wobei hierbei auf standardisierte und mitunter genormte Leistungsbeschreibungen LB zurückgegriffen werden kann, die in entsprechenden Datenbanken eine Auflistung einer Vielzahl von Bautätigkeiten unter Zuordnung von Leistungsnummern LN enthalten. Die Auswahl einer Leistungsnummer LN ruft dabei die entsprechende Beschreibung des Bauschrittes aus der Leistungsbeschreibung LB ab. Alternativ könnte der Bauschritt aber auch frei definiert und in einem Eingabefeld der Datenverarbeitungseinrichtung 7 beschrieben werden. Im Folgenden wird etwa angenommen, dass für den Bauplan gemäß Fig. 2a eines Kellers die Deckenfläche ermittelt werden soll, um benötigtes Material für den Bau der Deckenfläche zu errechnen.

Für den ausgewählten Bauschritt kann in weiterer Folge das entsprechende Berechnungselement definiert werden, was mithilfe der Eingabeschnittstelle 8 erfolgt. Das Berechnungselement kann etwa eine Grund- oder Deckenfläche oder eine Fassadenfläche sein, wobei der Flächeninhalt eines abgetasteten Polygons ermittelt wird. Das Berechnungselement könnte aber auch eine Wandfläche sein, wobei aus dem Umfang einer Bodenfläche durch Multiplikation mit einer manuell vorgebbaren Wandhöhe die Wandfläche errechnet werden kann. Das Berechnungselement könnte ferner auch die Länge einer Einzelstrecke sein, oder ein Volumen, das durch Multiplikation aus der Fläche eines abgetasteten Polygons mit einer manuell vorgebbaren Höhe errechnet wird, etwa im Fall eines Estrichs. Des Weiteren könnte das Berechnungselement auch eine Dachfläche sein, wobei der Flächeninhalt eines abgetasteten Polygons ermittelt wird, und aus einem manuell vorgebbaren Neigungswinkel die tatsächliche Dachfläche errechnet wird. Weitere Berechnungselemente sind denkbar und jeweils für den entsprechenden Bauschritt geeignet definierbar. Diese Festlegungen des Berechnungselements ermöglichen in weiterer Folge die korrekte Interpretation der eingelesenen Datenpunkte Pᵢ durch die Datenverarbeitungseinrichtung 7. Diese Festlegungen werden erfindungsgemäß des Weiteren über eine eigene Eingabeschnittstelle 8 vorgenommen, etwa indem ein entsprechendes Eingabefeld einer graphischen Benutzeroberfläche angeklickt wird, was zwar zunächst einen zusätzlichen Arbeitsschritt erfordert, danach die Datenaufnahme aus dem Bauplan aber sehr erleichtert, da sie in Form einiger weniger Datenpunkte vorgenommen werden kann. Im vorliegenden Beispiel wird etwa das Berechnungselement einer Deckenfläche ausgewählt. Abschließend ist der Maßstab festzulegen, der entweder bekannt und manuell eingestellt wird, oder vorher durch Kalibrierung anhand einer bekannten Streckenlänge des Bauplans erfolgt.

Falls die Auswahl des Funktionsmodus für den stiftförmigen Datenaufnehmer 1 noch nicht getroffen wurde, ist nun vor der Datenaufnahme der Datenmodus einzustellen, was entweder über die Eingabeschnittstelle 8 erfolgen kann, oder über einen entsprechenden Schalter am Datenaufnehmer 1 selbst. Im Datenmodus werden einzelne, punktförmige Daten in Form einzelner Datenpunkte Pᵢ eingelesen. Das Einlesen der Datenpunkte Pᵢ eines Berechnungselements erfolgt nun einfach durch Abtasten der äußeren Eckpunkte im Bauplan gemäß Fig. 2a, wobei darauf zu achten ist, dass die eingelesenen Datenpunkte Pᵢ in weiterer Folge durch lineare Interpolation verbunden werden. Die Eckpunkte sind daher nacheinander so abzutasten, dass deren geradlinige Verbindung das ausgewählte Berechnungselement am Bauplan richtig wiedergibt. Im gezeigten Beispiel gemäß Fig. 2a wären somit zeitlich aufeinanderfolgend die Datenpunkte P₁, P₂, P₂, P₄, P₅, P₆, P₇ und P₈ abzutasten. Freilich können aber auch gekrümmte Linien des Bauplans übernommen werden, indem der Abstand der abgetasteten Punkte entlang der gekrümmten Linie entsprechend klein gewählt wird, sodass deren geradlinige Verbindung eine gute Approximation der gekrümmten Linie darstellt.

Sobald alle Datenpunkte Pᵢ eines Berechnungselements eingelesen wurden, wird der Einleseschluss durch Betätigung des Tasters 3 am stiftförmigen Datenaufnehmer 1 vorgenommen. Bei Auswahl des Berechnungselements einer Fläche wird in weiterer Folge der letzte Datenpunkt P₈ automatisch mit dem ersten Datenpunkt P₁ zu einem geschlossenen Polygon verbunden. Das eingelesene Berechnungselement stellt sich daher der Datenverarbeitungseinrichtung 7 wie in der Fig. 2b gezeigt dar, und die Berechnung der Fläche kann wie hinlänglich bekannt vorgenommen werden. Zweckmäßiger Weise kann auf einer graphischen Oberfläche der Datenverarbeitungseinrichtung 7 das eingelesene Berechnungselement auch graphisch dargestellt werden.

Falls weitere Berechnungselemente eingelesen werden sollen, etwa Deckenflächen weiterer Geschoße eines Hauses, kann dies durch die Eingabeschnittstelle 8 der Datenverarbeitungseinrichtung 7 angezeigt werden. Hierfür ist auch festzulegen, ob eine Addition der zusätzlichen Berechnungselemente erfolgen soll, oder ob nachfolgend eingelesene Berechnungselemente subtrahiert werden sollen. Nach erfolgter Festlegung können weitere Berechnungselemente wie beschrieben eingelesen werden.

Falls keine weiteren Berechnungselemente eingelesen werden sollen, können in gleicher Weise weitere Bauschritte bearbeitet werden, für die jeweils neue Berechnungselemente definiert werden können, bis das gesamte Bauprojekt abgearbeitet ist. Die Baustoffmengen ergeben sich in bekannter Weise aus den Berechnungselementen, und können mitunter auch automatisiert errechnet werden. Aus den nun bekannten Baustoffmengen können in weiterer Folge Kostenvoranschläge für das Bauprojekt erstellt werden.

Die Erfindung ermöglicht es dabei, die Ermittlung der benötigten Baustoffmengen für Bauprojekte anhand von Bauplänen sehr zu vereinfachen und somit kostengünstiger zu gestalten, da der mühsame und zeitaufwändige Schritt der Datenübernahme aus analogen Bauplänen sehr erleichtert wird. Des Weiteren kann die Ermittlung der benötigten Baustoffmengen für Bauprojekte auch anhand von Bauplänen mit unvollständigen Abmessungen erfolgen, da ohnehin eine vollständige Aufnahme der Abmessungen der Berechnungselemente erfolgt. Sie ist des Weiteren nachvollziehbar und überprüfbar, da für jeden Bauschritt die Baustoffmengenberechnung, sowie jedes einzelne, ihr zu Grunde liegende Berechnungselement verfügbar ist. Des Weiteren ermöglicht die Erfindung eine sehr intuitive Datenaufnahme aus Bauplänen, da der Datenaufnehmer aufgrund der erfindungsgemäßen Vorrichtung zwischen dem Einlesen zweier Datenpunkte auch vom Bauplan abgehoben werden kann, und die so eingelesenen Datenpunkte aufgrund des erfindungsgemäßen Verfahrens auch verwertet werden können. Ohne einer erfindungsgemäßen Lokalisierungseinrichtung und externem Bezugspunkt dürfte der stiftförmige Datenaufnehmer nur zweidimensional bewegt, also nicht vom Bauplan abgehoben werden, da ansonsten die Information über die relative Positionsänderung verloren geht. Aufgrund der erfindungsgemäß vorgesehenen Bezugnahme auf einen externen Empfänger kann unabhängig von der zwischenzeitlichen Bewegung des Datenaufnehmers die augenblickliche Position der Spitze jederzeit bestimmt werden. Die Erfindung erlaubt aber freilich auch die kontinuierliche Positionsbestimmung der Spitze des Datenaufnahmers, etwa zum Nachzeichnen von Linien oder zum Schreiben. Ein Abtasten von Datenpunkten eines Bauplans mithilfe dreidimensionaler Bewegungen, indem gewissermaßen von einem Punkt am Bauplan zum nächsten "gesprungen" wird, kann jedoch viel rascher und bequemer erfolgen, als wenn Abmessungen durch zweidimensionale Bewegungen am Bauplan eingelesen werden müssen.

## Patentansprüche

1. Verfahren zur Ermittlung von längen-, flächen- oder volumenbasierten Berechnungsgrößen, etwa benötigter Baustoffmengen eines Bauprojekts umfassend mehrere Bauschritte, anhand eines Bauplans mithilfe einer Datenverarbeitungseinrichtung (7), die die Berechnungsgröße anhand der Berechnungselemente Länge, Fläche oder Volumen ermittelt, **dadurch gekennzeichnet, dass** in einem ersten Verfahrensschritt über eine Eingabeschnittstelle (8) Berechnungselemente ausgewählt werden, in einem zweiten Verfahrensschritt mithilfe eines, mit der Datenverarbeitungseinrichtung (7) verbundenen, stiftförmigen Datenaufnehmers (1) längen-, flächen- oder volumendefinierende Datenpunkte (Pᵢ) des Bauplans eingelesen werden, und in einem dritten Verfahrensschritt aus den eingelesenen Datenpunkten (Pᵢ) die ausgewählten Berechnungselemente durch lineare Interpolation rekonstruiert werden.

2. Verfahren nach Anspruch 2, **dadurch gekennzeichnet, dass** im ersten Verfahrensschritt mehrere Berechnungselemente ausgewählt werden, die über die Eingabeschnittstelle (8) mittels Addition oder Subtraktion miteinander verbindbar sind.

3. Verfahren nach Anspruch 1 oder 2, **dadurch gekennzeichnet, dass** im zweiten Verfahrensschritt durch Druckausübung auf die Spitze (2) des stiftförmigen Datenaufnehmers (1) ein Lokalisierungssignal für einen, außerhalb des stiftförmigen Datenaufnehmers (1) angeordneten Empfänger aktiviert wird, wobei erst bei Druckentlastung der Spitze (2) des stiftförmigen Datenaufnehmers (1) ein punktförmiges Einlesen von Datenpunkten (Pᵢ) erfolgt.

4. Vorrichtung zur Ermittlung von längen-, flächen- oder volumenbasierten Berechnungsgrößen, etwa benötigter Baustoffmengen eines Bauprojekts umfassend mehrere Bauschritte, anhand eines Bauplans mithilfe einer Datenverarbeitungseinrichtung (7) zur Ermittlung der Berechnungsgrößen anhand der Berechnungselemente Länge, Fläche oder Volumen, **dadurch gekennzeichnet, dass** die Datenverarbeitungseinrichtung (7) mit einer Eingabeschnittstelle (8) zur Auswahl eines Berechnungselements versehen ist, und ein, mit der Datenverarbeitungseinrichtung (7) verbundener, stiftförmiger Datenaufnehmer (1) zum Abtasten und Einlesen von längen-, flächen- oder volumendefinierenden Datenpunkten (Pᵢ) des Bauplans vorgesehen ist, sowie eine Lokalisierungseinrichtung für die Spitze (2) des stiftförmigen Datenaufnehmers (1) mit einem Sender eines sich im Raum ausbreitenden Lokalisierungssignals und einem Empfänger (5) für das Lokalisierungssignal zur Bestimmung der relativen Position der Spitze (2) zum Empfänger (5).

5. Vorrichtung nach Anspruch 4, **dadurch gekennzeichnet, dass** der Sender des Lokalisierungssignals am stiftförmigen Datenaufnehmer (1) angeordnet und über Druck auf die Spitze (2) aktivierbar ist, und der Empfänger (5) außerhalb des stiftförmigen Datenaufnehmers (1) angeordnet ist.

6. Vorrichtung nach Anspruch 4 oder 5, **dadurch gekennzeichnet, dass** es sich bei dem Sender des Lokalisierungssignals um eine Ultraschallquelle handelt, und beim Empfänger (5) um einen ortsauflösenden Ultraschalldetektor.

7. Vorrichtung nach einem der Ansprüche 4 bis 6, **dadurch gekennzeichnet, dass** der stiftförmige Datenaufnehmer (1) von einem Datenmodus, in dem ein punktförmiges Einlesen von Datenpunkten (Pᵢ) möglich ist, in einen Schreibmodus, in dem ein kontinuierliches Einlesen von Datenpunkten (Pᵢ) möglich ist, umschaltbar ist.

8. Vorrichtung nach einem der Ansprüche 4 bis 7, **dadurch gekennzeichnet, dass** ein Signalgeber zur Generierung eines optischen oder akustischen Signals nach jedem erfolgten Einlesen eines Datenpunktes (Pᵢ) vorgesehen ist.

9. Vorrichtung nach einem der Ansprüche 4 bis 8, **dadurch gekennzeichnet, dass** der stiftförmige Datenaufnehmer (1) einen Taster (3) zur Signalisierung des Einleseschlusses von Datenpunkten (Pᵢ) eines Berechnungselements an die Datenverarbeitungseinrichtung (7) aufweist.
